# EUROPEAN PATENT APPLICATION

(11) **EP 4 834 564 A1**
(43) Date of publication of application: **04.11.2026**
(21) Application number: 25173234.3
(22) Date of filing: 29.04.2025
(51) Int. Cl.: B29C 48/49, B29C 48/21, B29C 48/07, B29C 48/25, B29C 48/27, B29D 30/06, B29L 30/00

(54) **EXTRUSION HEAD FOR EXTRUSION OF RUBBER COMPOUNDS AND THE MEANS FOR ITS FIXATION**

(60) Divisional application: 26165505.4
(71) Applicant: Fischer TireTech Slovakia, s. r. o., 911 01 Trencin (SK)
(72) Inventor: Adaska, Peter, 913 05 Melcice (SK)
(74) Representative: inventa Patentova a znamkova kancelaria s.r.o.

(57) **Abstract**

The extrusion head (1) for the extrusion line for extrusion of highly elastic compounds, suitable in particular for forming semi-finished products of tyres, such as treads, sidewalls or fillings thereof, from rubber compounds, comprises the head body (10) with six independent inlet openings (30) for connection of the independent extruders, further comprising the first head segment (11) arranged rotary around the independent rotational axis (D₁) relative to the head body (1), as well as the second head segment (12) arranged rotary around the independent rotational axis (D₂) relative to the head body (10), and further comprising five inlet channel inserts (20, 21) arranged between the first and the second head segments, one of which is the fixed inlet channel insert (20) rigidly connected with the head body (10), and the other four are movable inlet channel inserts (21) arranged rotary relative to the head body (10), each of them around the independent rotational axis (D₃, D₄, D₅, D₆), wherein these above mentioned components are arranged relative to each other in such way, in the closed state of the extrusion head (1), the facing contact surfaces of the first head segment (11), the second head segment (12), and the inlet channel inserts (20, 21) are pressure-resistant joined to each other to form inlet channels (40), each of which is connected just with one of the above mentioned inlet openings (30).

## Description

### Technical field

The invention relates to the construction of extrusion head of the extrusion line intended for the production of semi-finished products from elastic compounds, specially semi-finished products for the production of tyres from rubber compounds. The invention falls within the field of mechanical devices in the rubber industry.

### Background

The extrusion lines are the key devices used for production of semi-finished product of the tyres such as treads, sidewalls or fillings. Modern tyres, and hence their components, use a complex material structure in order to meet the performance requirements under different operating conditions and they are therefore made up of several components or layers with different physical properties that perform different functions in the tyre. The extrusion lines used to manufacture them must therefore be capable to form materials from multiple extruders feeding an input mixture with different properties to ensure the necessary composition of the semi-finished product. The necessary layering and formation of the semi-finished product is then performed by extrusion in the extrusion head of such line, into which the material from the individual extruders is fed.

In the state of the art, the extrusion head disclosed in U.S. Patent Document US11027472 B2 is known. The body of the head itself is solid and has directly formed in it the set of openings for feeding material from the individual extruders, so that the possibilities of its cleaning and servicing are limited.

In the extrusion lines, the type of semi-finished product often changes and therefore it is often necessary to clean the extrusion head in order to maintain a constant quality of the produced product when changing the semi-finished product. For this purpose, according to the state of the art, the extrusion heads are used, which can be opened for cleaning or servicing, so that their individual parts can be made accessible to the operator.

Such extrusion head for forming the tread profiles of tyres is known in the state of the art, disclosed in European patent file EP3221117 B1, which allows the connection of up to five extruders. This extrusion head comprises the head body, two head segments and individual inlet channel inserts which define inlet channels between them for connection of the individual extruders. The head segments and the two channel inserts are arranged rotary relative to the head body, the channel inserts being arranged rotary around the common axis with the first head segment. Such arrangement improves the cleaning capabilities of the individual head portions formed by the movable channel inserts, but it does not allow the individual channel inserts to be selectively serviced, and in addition, due to the common axis of the rotary mounted channel components and the head segment, it involves the handling of a relatively large mass of matter when opening the head portion with the movable channel inserts, which increases the power requirements of the hydraulic systems used for this purpose and thus further complicates the possibility of tight fixation of these movable channel inserts and the head segment when using traditional fixation means employing these hydraulic systems. This consequently at high pressures, which arise in the extrusion head during the creation of semi-finished products, means an increased risk of leakages among the individual contact surfaces of the movable channel inserts and the head segment or fixed channel inserts, with a negative impact on the quality of the semi-finished product and the subsequent necessary cleaning of the entire extrusion head. The term 'contact surfaces' is to be understood as those areas of the surfaces of the head segments and channel inserts which are adjacent to each other when the extrusion head is closed.

The above mentioned fixation means known in the state of the art for sealing the closed extrusion head, which use for fixation of the hydraulic systems for opening the head segments themselves, furthermore prevent in the closed state the movement of the individual movable parts of the extrusion head only with respect to the body of the head, and thus do not perfectly prevent the possibility of mutual movement of the movable channel inserts, the head segments and the fixed channel inserts along the contact surfaces among them, so that the problem of sealing of the extrusion head and the need for subsequent cleaning thereof are not sufficiently solved by them.

It is therefore the objective of solution according to the present invention, to solve the above mentioned problems in the state of the art, namely to provide the extrusion head whose individual movable channel inserts would be movable relative to the head body independently of each other or the head segments, in order to provide more flexible cleaning and maintenance thereof, as well as to provide new solutions for locking and fixing the head segments relative to the head body, to minimise the risk of unwanted opening of the head under high pressure as well as to fix individual movable channel inserts, head segments and non-movable channel inserts to minimise or completely prevent their movement relative to each other along their contact surfaces in the closed state of the extrusion head.

### Summary of the invention

According to the first aspect of the present invention, there is provided the extrusion head for the extrusion line for extruding highly elastic compounds, suitable in particular for forming semi-finished products of tyres, such as treads, sidewalls or fillings thereof, from rubber compounds. Such extrusion head comprises the head body in which at least three independent inlet openings are arranged, each of which is designed to connect just one independent extruder.

The extrusion head further comprises the first head segment arranged rotary relative to the head body around the independent rotational axis, and the second head segment arranged rotary relative to the head body around the independent rotational axis, and the fixed inlet channel insert interconnected to the head body arranged between the first and second head segments.

In addition, the extrusion head further comprises at least one movable inlet channel insert arranged between the first and second head segments, arranged rotary relative to the head body around the independent rotational axis, wherein the different parts of the extrusion head are arranged relative to each other in such manner, in the closed state of the extrusion head, the facing contact surfaces of the first head segment and the inlet channel inserts are pressure-resistant joined together to form inlet channels between them, each connected to one inlet opening. The term "facing contact surfaces" is to be understood as those surfaces of adjacent parts of the extrusion head according to the present invention which are in contact with each other in the closed state of the head. The term "pressure-resistant connection" is to be understood as the interconnection of independent parts of the extrusion head according to the present invention which, in the closed head condition, is capable of withstanding the high pressures generated by the extruded material so as to prevent, as far as possible, unwanted leakage of the extruded material out of the inlet channels. The term "rotary mounted relative to the head body" means the attachment of the head segment or the movable inlet channel insert to the head body in such way as to permit its rotational movement relative to the head body around the rotational axis independently of another head segment or other movable inlet channel insert, respectively.

Preferably, the extrusion head according to the first aspect of the present invention comprises the head body with four independent inlet openings for connecting the independent extruders and three inlet channel inserts arranged in the manner described above, or comprises the head body with five independent inlet openings for connection of independent extruders and four inlet channel inserts arranged in the manner described above, or comprises the head body with six independent inlet openings for connection of independent extruders and five inlet channel inserts arranged in the manner described above.

The above described arrangement of the extrusion head according to the first aspect of the present invention makes it possible, for example, to increase the number of materials with different properties from which the semi-finished product is formed to up to six when using the arrangement with six individual inlet openings as described above, and at the same time improves serviceability as well as simplifies the cleaning of the head, thanks to the possibility of selective opening of the individual parts thereof, made possible by the arrangement with independent rotary axes. This arrangement according to the first aspect of the present invention provides substantially greater flexibility in opening the individual parts of the extrusion head, movably disposed relative to the head body, since it allows to open, for example, only one half thereof by opening one of the head segments and to perform service operations on the individual parts thereof thus made accessible, without the need to simultaneously open the other head segment. Similarly, after opening one head segment, it is possible, for example, subsequently to perform the service operations on the movable inlet channel insert adjacent thereto, as well as on the parts associated with this insert, without the need to simultaneously open any other movable inlet channel insert adjacent thereto. At the same time, this arrangement solves the problem of a relatively large mass of material when opening parts of the extrusion head if its individual moving parts are mounted with the common rotational axis, thus reducing the demands on the system of its opening, or its hydraulic parts, and consequently addresses the problem of arbitrary opening of the extrusion head at high pressures in the system during its operation.

Preferably, the extrusion head according to the first aspect of the present invention is arranged in such way that all of the above mentioned rotational axes are parallel to each other. Such arrangement allows the dimensions of the extrusion head to be optimised.

According to the first aspect of the present invention, the rotation of the individual rotary mounted movable inserts as well as the individual head segments around the corresponding independent rotational axes relative to the head body is preferably performed by means of independent drive units.

Preferably, the extrusion head according to the first aspect of the present invention further comprises the first auxiliary inlet arranged in the body of the head for connection of the first independent co-extruder, wherein this first auxiliary inlet is connected with the first auxiliary inlet arranged in the fixed inlet insert of the inlet channel.

Advantageously, the extrusion head according to the first aspect of the present invention further comprises the second auxiliary inlet arranged in the body of head for connection of the second independent co-extruder, wherein this second auxiliary inlet is connected with the second auxiliary inlet arranged in the fixed insert of the inlet channel.

Thanks to the arrangement with up to two auxiliary inlet openings and up to two auxiliary outlet channels as described above, it is possible, for example, according to the first aspect of the present invention, to increase the number of materials with different properties from which the semi-finished product is formed to up to eight.

According to the second aspect of the present invention, mutually cooperating fixation means are provided to prevent the movable inserts of the inlet channel from moving relative to each other or relative to the head segments, or the head segments from moving relative to the fixed insert of the inlet channel, in the closed state of the extrusion head. These mutually cooperating fixation means can advantageously be used in the extrusion head according to the first aspect of the invention, but can equally be used in any other extrusion head which uses rotary disposed movable inlet channel inserts or head segments relative to the head body.

Such mutually cooperating fixation means according to the second aspect of the present invention are arranged on mutually facing contact surfaces of the inlet channel insert and the adjacent inlet channel insert or the adjacent head segment, wherein these mutually cooperating fixation means, in the closed state of the extrusion head, define the clearance between the given inlet channel insert and the adjacent inlet channel insert or adjacent head segment and thereby prevent their mutual movement in the plane of these mutually facing contact surfaces.

In doing so, it is irrelevant whether all of the subject inlet channel inserts are rotary mounted relative to the head body, since mutually cooperating fixation means according to the present invention can also be arranged on the mutually facing contact surfaces of the fixed inlet channel insert and its adjacent rotary mounted movable inlet channel insert relative to the body of the head body, alternatively, on mutually facing contact surfaces of the fixed inlet channel insert and the head segment rotary mounted adjacent to the head body, or also on mutually facing contact surfaces of the movable inlet channel insert rotary mounted relative to the head body and the head segment rotary mounted adjacent to the head body.

In this way, the mutually cooperating fixation means according to the second aspect of the present invention solve the insufficient sealing of extrusion heads with rotary mounted movable inlet channel inserts and rotary mounted head segments, which under high extrusion pressures tend to move relative to each other nevertheless, in the closed head they are pressed together and fixed against the head body by the extrusion head closure mechanism or hydraulic drive units, thereby creating leaks and unwanted discharge of the extruded material between the individual head sections outside the inlet channels. Thanks to the use of the fixation means according to the present invention, it is possible to reduce the need for cleaning and servicing of the extrusion head, while minimizing unwanted stresses on the drive units or hydraulic systems used for opening and closing of the individual moving parts of the extrusion head.

Preferably, such mutually cooperating fixation means according to the second aspect of the present solution are arranged on mutually opposed contact surfaces of at least one movable inlet channel insert and at least one movable or fixed inlet channel insert adjacent thereto, or the adjacent head segment, wherein, in the closed state of the extrusion head, such mutually cooperating fixation means define the clearance between this at least one movable inlet channel insert and the adjacent movable or fixed inlet channel insert or adjacent head segment, and thereby prevent their movement relative to each other in the plane of these mutually facing contact surfaces, or such mutually cooperating fixation means are arranged on the mutually facing contact surfaces of the fixed inlet channel insert and at least one adjacent head segment thereof, wherein, in the closed state of the extrusion head, such mutually cooperating fixation means define the clearance between such fixed inlet channel insert and such adjacent head segment, thereby preventing their mutual movement in the plane of such mutually facing contact surfaces.

Preferably, such mutually cooperating fixation means according to the second aspect of the present invention comprise the fixation tooth and the fixation recess arranged on mutually opposed contact surfaces facing each other.

Preferably, such mutually cooperating fixation means, according to the second aspect of the present invention, further comprise the fixation stop arranged in the fixation recess. The fixation stop ensures the better fitting in of the fixation tooth and thereby further limits the relative movement of the individual movable segments with the mutually cooperating fixation means in the plane of their mutually facing contact surfaces.

According to the third aspect of the present invention, the locking means are provided for locking of head segment of the extrusion head for extruding the rubber compounds. In the locked state of the extrusion head, such locking means prevent the body of the extrusion head and the head segment, arranged rotary around the rotary axis, from moving relative to the body of the head.

These locking means can advantageously be used in the extrusion head according to the first aspect of the invention, but can equally be used in any other extrusion head which uses movable inlet channel inserts or head segments rotary arranged relative to the head body. In the case of use of such locking means in the extrusion head according to the first aspect of the invention, or an analogously arranged extrusion head which uses movable inlet channel inserts rotary disposed relative to the head body or head segments rotary disposed relative to the head body, it is possible, by locking the head segments of such closed extrusion head, to prevent effectively not only the mutual movement of the rotary mounted head segments relative to the body of such head, but also to prevent the mutual movement of the rotary mounted movable inlet channel inserts relative to the body of such head.

The locking means according to the third aspect of the present invention comprise the locking pin of longitudinal shape with the locking end, the locking recess arranged in the head segment, in shape corresponding to the shape of the locking end of the locking pin, the locking sidewall with the through opening corresponding in shape to the transverse cross section of the locking pin, fixed laterally to the head body in such manner, in the open head position, allowing the head segments and the movable inlet channel inserts the rotary movement relative to the head body, while in the closed head position, the head segment can be introduced into the locked position in which the locking end of the locking pin abuts against the bottom of the locking recess and simultaneously the locking pin at least partially fills the through opening of the locking sidewall in such way as to prevent mutual movement of at least one head segment and the locking sidewall.

Such arrangement of the locking means, in comparison with the arrangement of the head known in the state of the art, which uses hydraulic systems for locking the individual moving parts of the head to close and open them, substantially reduces the risk of leakage between the individual contact surfaces of the moving channel inserts and the head segment, respectively. fixed channel inserts caused by high pressures during the extrusion of rubber or other compounds, since in the locked state the pressure forces are borne by the fixed connection of the individual head segments, and at the same time simplifies the construction of such hydraulic systems.

Preferably, such locking means are arranged in pairs on both sides of the head segment, or in pairs on both sides of both head segments, which increase the locking effect and further reduces the above mentioned risk of leakage.

Preferably, such locking means are arranged with the independent hydraulic drive, ensuring the movement of the locking pin in the direction of its axis and thus its insertion into and withdrawal from the locking recess, which simplifies the manipulation of the locking pin.

Preferably, such locking means are arranged in such way that the central axis of the locking recess, and hence the longitudinal axis of the locking pin, is parallel to the independent rotational head segment, which limits the development of asymmetry-induced forces that can potentially lead to the leakages mentioned above.

According to the third aspect of the present invention, preferably the locking means comprise the locking pin with circular cross section. In such arrangement, the locking means further advantageously comprise the rotary insert arranged at the bottom of the locking recess, wherein the rotary insert overlaps less than half of the bottom of the locking recess and simultaneously contacts the side wall thereof and wherein the side edge of the rotary insert, facing away from the side wall against which it abuts, forms the plane which makes a sharp angle with the bottom of the locking recess, and wherein the shape of the locking end of the locking pin corresponds in shape to the shape of the rotary insert. In such arrangement, the rotary insert ensures more precise seating of the head segment in the locking position, since when the locking pin is inserted the compressive forces are applied to the head segment, which gradually seals it in the specified position.

Such locking means further advantageously comprise the rotary insert, wherein the surface of the lateral edge thereof, facing away from the side wall, forms the friction plate to minimize frictional forces during insertion of the locking pin.

The locking means according to the third aspect of the present invention are preferably, independently of the shape of cross-section of the locking pin, arranged in such way that the leading edge of the locking recess comprises the firm feather in the area of arrangement of the rotary insert. Such firm feather prevents material wear of both the leading edge and the locking end of the locking pin arising from the locking pin being inserted into the locking recess.

### Brief description of the drawings

The individual aspects of the present invention will be further explained in the drawings, in which:
Fig. 1 shows the extrusion head according to the first aspect of the present invention in the open state,
Fig. 2 shows the extrusion head according to the first aspect of the present invention in the closed state,
Fig. 3 shows the detailed view of the fixed inlet channel insert of the extrusion head according to the first aspect of the present invention, in which the first and second auxiliary inlet channels are arranged,
Fig. 4 shows the overall and detailed view of the mutually cooperating fixation means according to the second aspect of the present invention,
Fig. 5 shows the detailed view of the locking means according to the third aspect of the present invention, in radial and axial cross section,
Fig. 6 shows the detailed sectional view of the locking means according to the third aspect of the present invention with the partially inserted locking pin,
Fig. 7 shows the detailed sectional view of the locking means according to the third aspect of the present invention with fully inserted locking pin.

### Examples of embodiments of the invention

The invention will be further explained by reference to the example embodiments with reference to the relevant drawings. It is understood that the individual embodiments according to the invention are presented for purposes of illustration and not as limitations of the embodiments. Those skilled in the prior art will find or be able to discover, using no more than routine experimentation, many equivalents to specific embodiments of the invention. Such equivalents will also fall within the scope of the patent claims. Those skilled in the art cannot have a problem with the optimal design of the construction, so the following features have not been discussed in detail.

### Example 1

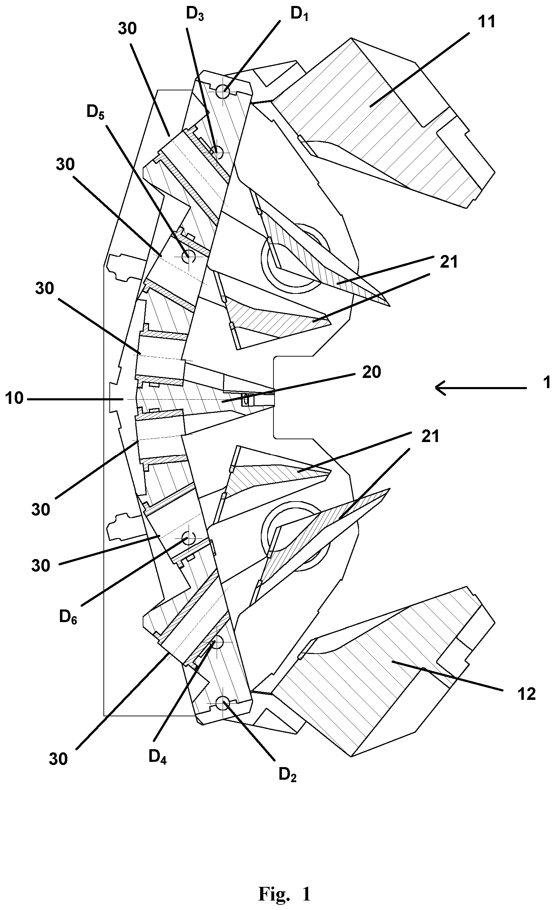

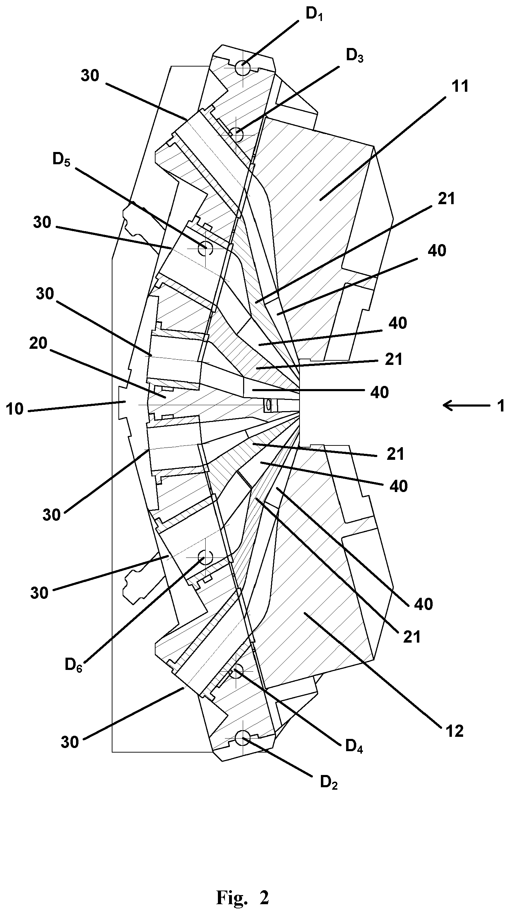

In this example of the specific embodiment, the extrusion head (1) for extruding the rubber compounds according to the first aspect of the present invention, shown in Figures 1 and 2, is described. This extrusion head (1) comprises the head body (10) with six independent inlet openings (30) for connection of the independent extruders, furthermore this head (1) comprises the first head segment (11) arranged rotary around the independent rotational axis (D₁) relative to the head body (1), as well as the second head segment (12) arranged rotary around the independent rotational axis (D₂) relative to the head body (10), and further comprises also five inserts of the inlet channel (20, 21) arranged between the first and second head segments, one of which is the fixed insert of the inlet channel (20) rigidly connected to the head body (10), and four others are movable inserts of the inlet channel (21) arranged rotary relative to the head body (10), each of them around the independent rotational axis (D₃, D₄, D₅, D₆), wherein these introduced components are arranged relative to each other in such manner, in the closed state of the extrusion head (1), the facing contact surfaces of the first head segment (11), the second head segment (12), and the inserts of the inlet channel (20, 21) are pressure-resistant joined to each other to form inlet channels (40), each of which is connected with one of the above mentioned inlet openings (30).

### Example 2

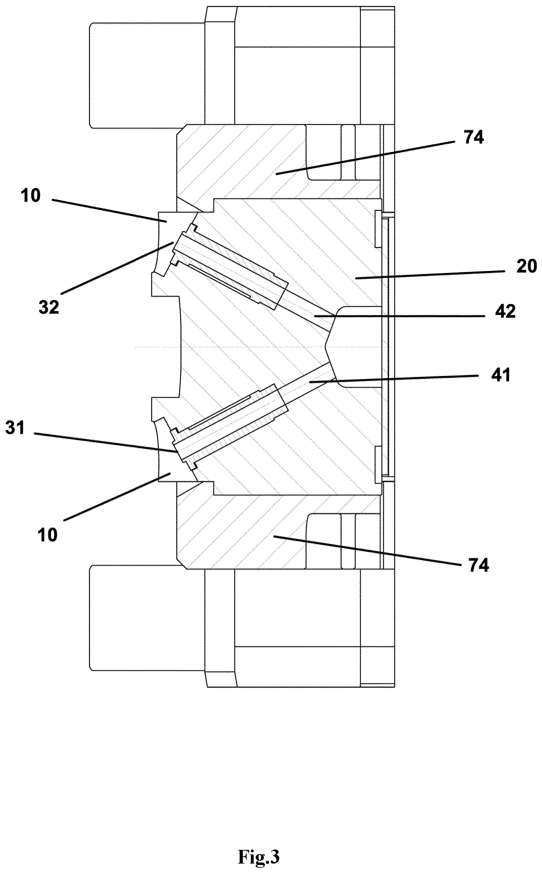

In this example of the specific embodiment, the extrusion head (1) for extruding the rubber compounds described in Example 1 is described, the detail of which is shown in figure 3. Such head (1) comprises the first auxiliary inlet opening (31) arranged in the head body (10) for connection of the first independent co-extruder, wherein this first auxiliary inlet opening (31) is connected with the first auxiliary inlet channel (41) arranged in the fixed insert of the inlet channel (20). In addition, such head also comprises this second auxiliary inlet opening (32) for connection of the second independent co-extruder, wherein this second auxiliary inlet opening (32) is connected with the second auxiliary inlet channel (42) arranged in the fixed insert of the inlet channel (20).

### Example 3

In this example of the specific embodiment, mutually cooperating fixation means (61, 62, 63) are described for preventing the movement of the movable inserts (21) of the inlet channel towards each other or towards the head segments (11, 12), or the movement of the head segments (11, 12) towards the fixed insert of the inlet channel (20), in the closed state of the extrusion head (1), according to the second aspect of the present invention. These mutually cooperating fixation means (61, 62, 63) can advantageously be used in the extrusion head (1) according to the first aspect of the invention, but can equally be used in any other extrusion head (1) which uses movable inlet channel inserts (21) or head segments (11, 12) rotary arranged with respect to the head body (10), and thus also in the extrusion head (1) described in the above mentioned Example 1 or in Example 2.

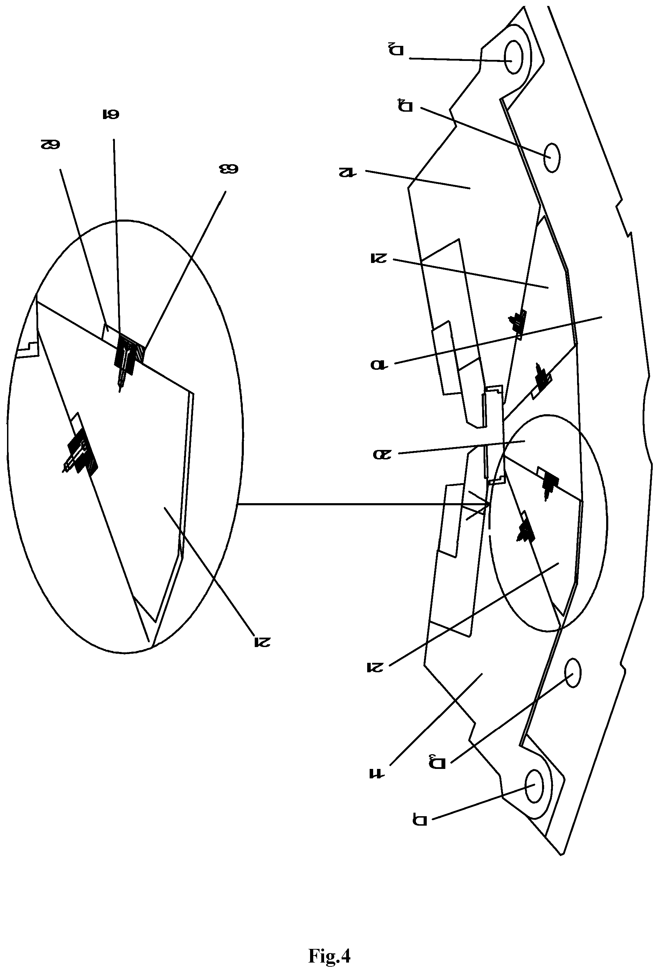

According to this example of the specific embodiment, such mutually cooperating fixation means (61, 62, 63) are arranged in the head (1) for extruding the rubber compounds according to the first aspect of the present invention and illustrated in figure 4, comprising the head body (10) with four, not shown in figure 4, independent inlet openings (30) for connection of the independent extruders, further, this head (1) comprises the first head segment (11) arranged rotary around the independent rotational axis (D₁) relative to the head body (1), as well as the second head segment (12) arranged rotary around the independent rotational axis (D₂) relative to the head body (10), and further comprises the three inserts of the inlet channel (20, 21) arranged between the first and second head segments, one of which is the fixed insert of the inlet channel (20) rigidly connected with the head body (10), and the other two are movable inserts of the inlet channel (21) arranged rotary relative to the head body (10), each of them around the independent rotational axis (D₃, D₄), wherein these mentioned components are arranged in such way that, in the closed state of the extrusion head (1), the facing contact surfaces of the first head segment (11), the second head segment (22), and the inserts of the inlet channel (20, 21) are pressure-resistant joined to each other and at the same time form inlet channels (40), not shown in figure 4, between each other, each of which is connected just with one of the above mentioned inlet openings (30).

The arrangement of such cooperating fixation means (61, 62, 63) is such that each movable insert of the inlet channel (21) and adjacent head segment (11, 12) as well as the adjacent fixed insert of the inlet channel (20) have mutually cooperating fixation means (61, 62, 63) arranged on their facing surfaces which, in the closed state of the extrusion head (1), define the clearance between each such movable insert of the inlet channel (21) and the adjacent head segment (11, 12), and the adjacent fixed insert of the inlet channel (20), thereby preventing their mutual movement in the plane of such mutually facing contact surfaces, wherein the mutually cooperating fixation means (61, 62, 63) comprise the fixation tooth (61) and the fixation recess (62) which are arranged on mutually opposed mutually facing contact surfaces, as well as the fixation stop (63) arranged in the fixation recess (62). In doing so, the fixation recess (62) is arranged in the fixed insert of the inlet channel (20) and the fixation tooth (61) is arranged in the head segment (11, 12).

### Example 4

In this example of the specific embodiment, the locking means (71, 72, 73, 74, 75, 76, 77) for locking the head segment (11, 12) of the extrusion head (1) for extruding the rubber compound according to the third aspect of the present invention, are described. In the locked state of the extrusion head (1), such locking means (71, 72, 73, 74, 75, 76, 77) prevent the body of the extrusion head (10) and the head segment (11, 12) arranged rotary around the rotational axis (D₁, D₂) from moving relative to the body of the head (10). These described locking means (71, 72, 73, 74, 75, 76, 77) can advantageously be used in the extrusion head (1) according to the first aspect of the invention, but can equally be used in any other extrusion head (1) which uses movable head segments (11, 12) rotary arranged relative to the head body (10), and thus also in the extrusion head (1) described in the above mentioned Example 1 or in Example 2, including the extrusion head (1) using in addition the mutually cooperating fixation means (61, 62, 63) described in the above mentioned Example 3.

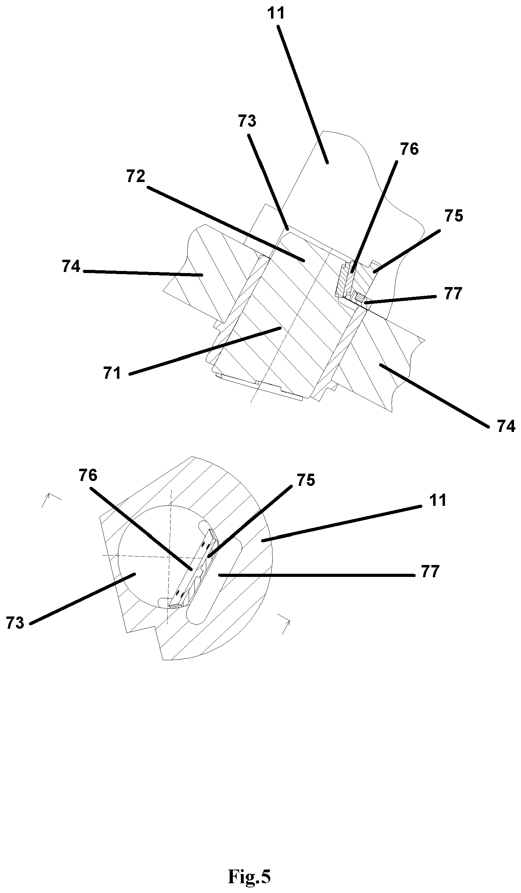

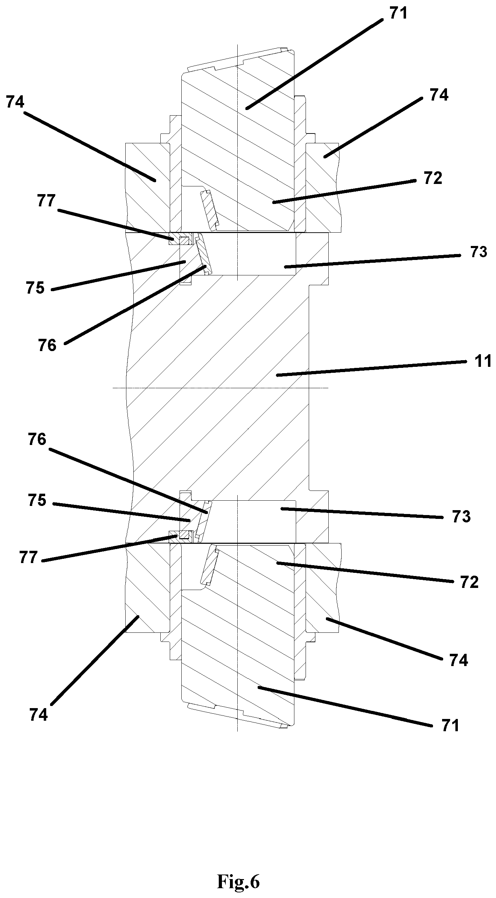

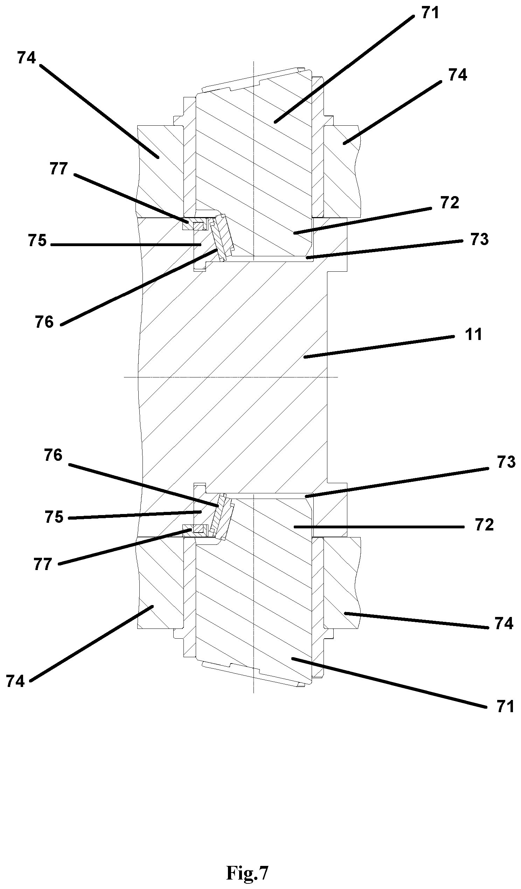

According to this example of the specific embodiment illustrated in Figures 5, 6 and 7, the extrusion head (1) described above in Example 1 is arranged: the locking pin (71) of longitudinal shape with the locking end (72), the locking recess (73) arranged in the head segment (11), which corresponds in shape to the shape of the locking end (72) of the locking pin (71), and the locking sidewall (74) with the through opening, corresponding in shape to the cross-section of the locking pin (71), which is fixed laterally to the head body (10) in such way that, in the open state of the head (1), it allows the head segment (11) and the movable inserts of the inlet channel (21) to be rotary movable relative to the head body (10), wherein, in the closed state of the head (1), the head segment (11) can be introduced into the locked state in which the locking end (72) of the locking pin abuts the bottom of the locking recess (73) and, at the same time, the locking pin (71) at least partially fills the through opening of the locking sidewall (74) in such way that it prevents the mutual movement of the head segment (11) and the locking sidewall (74), and wherein the central axis of the locking recess (73) is parallel to the independent rotational axis (D₁) of the head segment (11), and wherein the cross-section of the locking pin (71) is circular, and wherein the locking means (71, 72, 73, 74, 75, 76, 77) further comprise the rotary insert (75) arranged at the bottom of the locking recess (73), wherein the rotary insert (75) overlaps less than half of the bottom of the locking recess (73) and simultaneously abuts the side wall thereof, and wherein the lateral edge of the rotary insert (75), turned away from the side wall on which it abuts, forms the plane which makes a sharp angle with the bottom of the locking recess (73), and wherein the shape of the locking end (72) of the locking pin (71) corresponds in shape to the shape of the rotary insert (75), and wherein the surface of the side edge of the rotary insert (75) facing away from the side wall against which it abuts, forms the friction plate (76), and wherein the leading edge of the locking recess comprises the firm feather (77) in the area of the arrangement of the rotary insert (75).

The locking means (71, 72, 73, 74, 75, 76, 77) described above in this example embodiment are analogously arranged on both sides of each head segment (11, 12) in pairs.

### Industrial applicability

The extrusion head of the extrusion line according to the present invention is useful in the production of semi-finished products of tyres from highly elastic compounds in the rubber industry, as well as in the production of semi-finished products of tyres from highly elastic compounds in related industries, or in the subsequent processing and recycling of plastic materials.

### Reference numbers

- 1: extrusion head
- 10: head body
- 11: the first head segment
- 12: the second head segment
- 20: fixed inlet channel insert
- 21: movable inlet channel insert
- 30: inlet opening
- 31: the first auxiliary inlet opening
- 32: the second auxiliary inlet opening
- 40: inlet channel
- 41: the first auxiliary inlet channel
- 42: the second auxiliary inlet channel
Fixation means:
   61 fixation tooth
   62 fixation recess
   63 fixation stop
Locking means:
   71 locking pin
   72 locking end
   73 locking recess
   74 locking sidewall
   75 rotary insert
   76 friction plate
   77 firm feather
- D₁: a first independent rotary axis
- D₂: a second independent rotary axis
- D₃: a third independent rotary axis
- D₄: a fourth independent rotary axis
- D₅: a fifth independent rotary axis
- D₆: a sixth independent rotary axis

## Claims

1. An extrusion head for an extrusion of rubber compounds, **characterized in that** it comprises:
- a head body (10) with at least three independent inlet openings (30) for connection of an independent extruders;
- a first head segment (11) arranged rotary around an independent rotational axis (D₁), relative to the head body (10);
- a second head segment (12) arranged rotary around an independent rotational axis (D₂), relative to the head body (10);
- at least two inserts of an inlet channel (20, 21) arranged between the first and second head segments, one of which is the fixed insert of the inlet channel (20) rigidly connected with the head body (10) and at least one other is the movable insert of the inlet channel (21) arranged rotary, relative to the head body (10), around the independent rotational axis (D₃);
mutually arranged in such way that in the closed state of the extrusion head (1), the facing contact surfaces of the first head segment (11), the second head segment (12), and the inserts of the inlet channel (20, 21) are pressure-resistant connected to each other and at the same time form inlet channels (40), each of which is connected to exactly one inlet opening (30).

2. The extrusion head according to claim 1, **characterized in that** it comprises:
- the head body (10) with four independent inlet openings (30) for connection of independent extruders;
- three inserts of the inlet channel (20, 21) arranged between the first and second head segments, one of which is the fixed insert of the inlet channel (20) rigidly connected with the head body (10), and the other two are movable inserts of the inlet channel (21) arranged rotary relative to the head body (10), each of them around the independent rotational axis (D₃, D₄).

3. The extrusion head according to claim 1, **characterized in that** it comprises:
- the head body (10) with five independent inlet openings (30) for connection of independent extruders;
- four inserts of the inlet channel (20, 21) arranged between the first and second head segments, one of which is the fixed insert of the inlet channel (20), rigidly connected with the head body (10), and the other three are movable inserts of the inlet channel (21), arranged rotary relative to the head body (10), each of them around the independent rotational axis (D₃, D₄, D₅).

4. The extrusion head according to claim 1, **characterized in that** it comprises:
- the head body (10) with six independent inlet openings (30) for connection of independent extruders;
- five inserts of the inlet channel (20, 21) arranged between the first and second head segments, one of which is the fixed insert of the inlet channel (20) rigidly connected with the head body (10), and the other four are movable inserts of the inlet channel (21) arranged rotary relative to the head body (10), each of them around the independent rotational axis (D₃, D₄, D₅, D₆).

5. The extrusion head according to any one of the preceding claims, **characterized in that** a first auxiliary inlet opening (31) is arranged in the head body (10) for connection of the first independent co-extruder, wherein this first auxiliary inlet opening (31) is connected with a first auxiliary inlet channel (41) arranged in the fixed insert of the inlet channel (20).

6. The extrusion head according to claim 5, **characterized in that** a second auxiliary inlet opening (32) is arranged in the head body (10) for connection of the second independent co-extruder, wherein this second auxiliary inlet opening (32) is connected with the second auxiliary inlet channel (42) arranged in the fixed insert of the inlet channel (20).

7. The extrusion head according to any one of the preceding claims, **characterized in that** at least one movable insert of the inlet channel (21) and at least one movable insert of the inlet channel (21) adjacent thereto, or the head segment (11, 12) adjacent thereto, or the fixed insert of the inlet channel (20) adjacent thereto, have mutually cooperating fixation means (61, 62, 63) arranged on the mutually facing contact surfaces, which, in the closed state of the extrusion head (1), define the clearance between this at least one movable insert of the inlet channel (21) and the adjacent movable insert of the inlet channel (21) or the adjacent head segment (11, 12) or the adjacent fixed insert of the inlet channel (20), and thereby prevent their mutual movement in the plane of these mutually facing contact surfaces.

8. The extrusion head according to claim 1, **characterized in that** the fixed insert of the inlet channel (20) and at least one head segment (11, 12) adjacent thereto have cooperating fixation means (61, 62, 63) arranged on mutually facing contact surfaces, which, in the closed state of the extrusion head (1), define the clearance between this fixed insert of the inlet channel (20) and the adjacent head segment (11, 12) and thus prevent their mutual movement in the plane of these mutually facing contact surfaces.

9. The extrusion head according to claim 7 or 8, **characterized in that** the mutually cooperating fixation means (61, 62, 63) comprise the fixation tooth (61) and the fixation recess (62) arranged on mutually opposed contact surfaces facing each other.

10. The extrusion head according to claim 9, **characterized in that** the fixation stop (63) is arranged in the fixation recess (62).

11. The extrusion head according to any one of the preceding claims, **characterized in that** it comprises locking means (71, 72, 73, 74, 75, 76, 77) comprising:
- the locking pin (71) of longitudinal shape with locking end (72);
- the locking recess (73) arranged in the head segment (11, 12), corresponding in shape with the shape of the locking end (72) of the locking pin (71);
- the locking sidewall (74) with through opening, corresponding in shape with the cross-section of the locking pin (71), fixed laterally to the head body (10) in such way that, in the open state of the head (1), it allows the head segments (11, 12) and the movable inserts of the inlet channel (21) to move in rotary motion relative to the head body (10);
wherein, in the closed state of the head (1), at least one head segment (11, 12) can be introduced into the locked state in which the locking end (72) of the locking pin abuts the bottom of the locking recess (73) and simultaneously, the locking pin (71) at least partially fills the through opening of the locking sidewall (74) in such way that it prevents at least one of the head segments (11, 12) and the locking sidewall (74) from relative movement of each other.

12. The extrusion head according to claim 11, **characterized in that** the central axis of the locking recess (73) is parallel to the independent rotational axis (D₁, D₂) of at least one head segment (11, 12).

13. The extrusion head according to claim 11 or 12, **characterized in that** the cross-section of the locking pin (71) is circular.

14. The extrusion head according to claim 13, **characterized in that** the locking means (71, 72, 73, 74, 75, 76, 77) further comprise a rotary insert (75) arranged at the bottom of the locking recess (73), wherein the rotary insert (75) overlaps less than half of the bottom of the locking recess (73) and simultaneously abuts the side wall thereof, and wherein the side edge of the rotary insert (75), facing away from the side wall on which it abuts, forms the plane which makes the sharp angle with the bottom of the locking recess (73), and wherein the shape of the locking end (72) of the locking pin (71) corresponds in shape to the shape of the rotary insert (75)

15. The extrusion head according to claim 14, **characterized in that** the surface of the side edge of the rotary insert (75) facing away from the side wall against which it abuts, forms the friction plate (76).

16. The extrusion head according to any one of claims 14 or 15, **characterized in that** the leading edge of the locking recess comprises the firm feather (77) in the area of the rotary insert (75) arrangement.

17. The extrusion head according to any one of claims 11 to 16, **characterized in that** it comprises the pair of locking means (71, 72, 73, 74, 75, 76, 77) arranged on both sides of at least one head segment (11, 12).

## Amended claims

### Amended claims in accordance with Rule 137(2) EPC.

1. An extrusion head for an extrusion of rubber compounds, **comprising:**
- a head body (10) with at least three independent inlet openings (30) for connection of an independent extruders;
- a first head segment (11) arranged rotary around an independent rotational axis (D₁), relative to the head body (10);
- a second head segment (12) arranged rotary around an independent rotational axis (D₂), relative to the head body (10); and
- at least two inserts of an inlet channel (20, 21) arranged between the first and second head segments, one of which is the fixed insert of the inlet channel (20) rigidly connected with the head body (10) and at least one other is the movable insert of the inlet channel (21) arranged rotary, relative to the head body (10), wherein, in the closed state of the extrusion head (1), the facing contact surfaces of the first head segment (11), the second head segment (12), and the inserts of the inlet channel (20, 21) are pressure-resistant connected to each other and at the same time form inlet channels (40), each of which is connected to exactly one inlet opening (30), **characterized in that** each movable insert of the inlet channel (21) is mounted for rotation about a respective rotation axis (D3, D4, D5, D6) that is distinct from the rotation axes (D1, D2) of the head segments (11, 12) and is not shared with any other movable insert.

2. The extrusion head according to claim 1, **characterized in that** it comprises:
- the head body (10) with four independent inlet openings (30) for connection of independent extruders;
- three inserts of the inlet channel (20, 21) arranged between the first and second head segments, one of which is the fixed insert of the inlet channel (20) rigidly connected with the head body (10), and the other two are movable inserts of the inlet channel (21) arranged rotary relative to the head body (10), each of them around a respective independent rotational axis (D₃, D₄).

3. The extrusion head according to claim 1, **characterized in that** it comprises:
- the head body (10) with five independent inlet openings (30) for connection of independent extruders;
- four inserts of the inlet channel (20, 21) arranged between the first and second head segments, one of which is the fixed insert of the inlet channel (20), rigidly connected with the head body (10), and the other three are movable inserts of the inlet channel (21), arranged rotary relative to the head body (10), each of them around a respective independent rotational axis (D₃, D₄, D₅).

4. The extrusion head according to claim 1, **characterized in that** it comprises:
- the head body (10) with six independent inlet openings (30) for connection of independent extruders;
- five inserts of the inlet channel (20, 21) arranged between the first and second head segments, one of which is the fixed insert of the inlet channel (20) rigidly connected with the head body (10), and the other four are movable inserts of the inlet channel (21) arranged rotary relative to the head body (10), each of them around a respective independent rotational axis (D₃, D₄, D₅, D₆).

5. The extrusion head according to any one of the preceding claims, **characterized in that** a first auxiliary inlet opening (31) is arranged in the head body (10) for connection of the first independent co-extruder, wherein this first auxiliary inlet opening (31) is connected with a first auxiliary inlet channel (41) arranged in the fixed insert of the inlet channel (20).

6. The extrusion head according to claim 5, **characterized in that** a second auxiliary inlet opening (32) is arranged in the head body (10) for connection of the second independent co-extruder, wherein this second auxiliary inlet opening (32) is connected with the second auxiliary inlet channel (42) arranged in the fixed insert of the inlet channel (20).

7. The extrusion head according to any one of the preceding claims, **characterized in that** at least one movable insert of the inlet channel (21) and at least one other movable insert of the inlet channel (21) adjacent thereto, or the head segment (11, 12) adjacent thereto, or the fixed insert of the inlet channel (20) adjacent thereto, have mutually cooperating fixation means (61, 62, 63) arranged on the mutually facing contact surfaces, which, in the closed state of the extrusion head (1), define the clearance between this at least one movable insert of the inlet channel (21) and the adjacent movable insert of the inlet channel (21) or the adjacent head segment (11, 12) or the adjacent fixed insert of the inlet channel (20), and thereby prevent their mutual movement in the plane of these mutually facing contact surfaces.

8. The extrusion head according to claim 1, **characterized in that** the fixed insert of the inlet channel (20) and at least one head segment (11, 12) adjacent thereto have cooperating fixation means (61, 62, 63) arranged on mutually facing contact surfaces, which, in the closed state of the extrusion head (1), define the clearance between this fixed insert of the inlet channel (20) and the adjacent head segment (11, 12) and thus prevent their mutual movement in the plane of these mutually facing contact surfaces.

9. The extrusion head according to claim 7 or 8, **characterized in that** the mutually cooperating fixation means (61, 62, 63) comprise the fixation tooth (61) and the fixation recess (62) arranged on mutually opposed contact surfaces facing each other.

10. The extrusion head according to claim 9, **characterized in that** the fixation stop (63) is arranged in the fixation recess (62).

11. The extrusion head according to any one of the preceding claims, **characterized in that** it comprises locking means (71, 72, 73, 74, 75, 76, 77) comprising:
- the locking pin (71) of longitudinal shape with locking end (72);
- the locking recess (73) arranged in the head segment (11, 12), corresponding in shape with the shape of the locking end (72) of the locking pin (71);
- the locking sidewall (74) with through opening, corresponding in shape with the cross-section of the locking pin (71), fixed laterally to the head body (10) in such way that, in the open state of the head (1), it allows the head segments (11, 12) and the movable inserts of the inlet channel (21) to move in rotary motion relative to the head body (10);
wherein, in the closed state of the head (1), at least one head segment (11, 12) can be introduced into the locked state in which the locking end (72) of the locking pin abuts the bottom of the locking recess (73) and simultaneously, the locking pin (71) at least partially fills the through opening of the locking sidewall (74) in such way that it prevents at least one of the head segments (11, 12) and the locking sidewall (74) from relative movement of each other.

12. The extrusion head according to claim 11, **characterized in that** the central axis of the locking recess (73) is parallel to the independent rotational axis (D₁, D₂) of at least one head segment (11, 12).

13. The extrusion head according to claim 11 or 12, **characterized in that** the cross-section of the locking pin (71) is circular.

14. The extrusion head according to claim 13, **characterized in that** the locking means (71, 72, 73, 74, 75, 76, 77) further comprise a rotary insert (75) arranged at the bottom of the locking recess (73), wherein the rotary insert (75) overlaps less than half of the bottom of the locking recess (73) and simultaneously abuts the side wall thereof, and wherein the side edge of the rotary insert (75), facing away from the side wall on which it abuts, forms the plane which makes the sharp angle with the bottom of the locking recess (73), and wherein the shape of the locking end (72) of the locking pin (71) corresponds in shape to the shape of the rotary insert (75)

15. The extrusion head according to claim 14, **characterized in that** the surface of the side edge of the rotary insert (75) facing away from the side wall against which it abuts, forms the friction plate (76).

16. The extrusion head according to any one of claims 14 or 15, **characterized in that** the leading edge of the locking recess comprises the firm feather (77) in the area of the rotary insert (75) arrangement.

17. The extrusion head according to any one of claims 11 to 16, **characterized in that** it comprises the pair of locking means (71, 72, 73, 74, 75, 76, 77) arranged on both sides of at least one head segment (11, 12).
